(19) Europäisches Patentamt
European Patent Office
Office européen des brevets

(11) Publication number: **0 362 378**
**A1**

(12) **EUROPEAN PATENT APPLICATION**
**published in accordance with Art. 158(3) EPC**

(21) Application number: **88903950.9**

(22) Date of filing: **28.04.88**

(86) International application number:
**PCT/JP88/00436**

(87) International publication number:
**WO 88/08435 (03.11.88 88/24)**

(51) Int. Cl.⁵: **C08G 73/00 , H01B 1/12**

(30) Priority: **30.04.87 JP 104374/87**

(43) Date of publication of application:
**11.04.90 Bulletin 90/15**

(84) Designated Contracting States:
**DE FR**

(71) Applicant: **KABUSHIKI KAISHA KOMATSU SEISAKUSHO**
**3-6, Akasaka 2-chome**
**Minato-ku Tokyo 107(JP)**

Applicant: **Yoshino, Katsumi**
**166-3, Obu-cho**
**Kishiwada-shi Osaka-fu(JP)**

(72) Inventor: **ORITA, Minoru**
**920, Itado Isehara-shi**
**Kanagawa-ken 259-11(JP)**

(74) Representative: **TER MEER - MÜLLER - STEINMEISTER & PARTNER**
**Mauerkircherstrasse 45**
**D-8000 München 80(DE)**

(54) **PROCESS FOR PREPARING AROMATIC AMINE POLYMER.**

(57) A process for preparing an aromatic amine polymer by electrolytic oxidative polymerization in a comoparatively short time is disclosed. The process is intended to form a film having a uniform, dense, and smooth surface and a good strength, and comprises polymerizing an aromatic amine such as aniline by electrolytic oxidative polymerization in the presence of a protonic acid, with an alcoholic solvent being used as a solvent contained in the electrolytic solution. In addition, a metal salt may optionally be added as a third component.

EP 0 362 378 A1

SPECIFICATION

# PROCESS FOR PRODUCING AROMATIC AMINE POLYMERS

## Field of the Invention

This invention relates to a process for producing aromatic amine polymers, such as polyaniline. More particularly, it relates to a process for producing aromatic amine polymers, which gives uniform polymer film with a smooth surface and satisfactory mechanical strengths by electrolytic oxidative polymerization at low temperatures. The polymer film thus obtained can be widely used, for example, in plastic cells, display elements, sensors, electromagnetic shields and electronic devices.

## Background of the Invention

The methods of preparing polyaniline, which is a typical aromatic amine polymer, may be broadly divided into two types: (i) chemical synthesis, and (ii) electrolytic oxidative polymerization. The former is a long known method [ A. G. Green and A. E. Woodhead, J. Chem. Soc., 2388 ( 1910 )]; for example, aniline dissolved in hydrochloric acid is polymerized by using ammonium persulfate, $(NH_4)_2S_2O_8$, as initiator. Polyaniline thus formed is powder, which, after being washed and dried, is press-molded into pellets for practical use.

The electrolytic oxidative polymerization is a method in which aniline is dissolved in an aqueous solution of a protonic acid, electrodes made of a metal or Nesa glass are put in the solution, and a DC voltage is impressed, thereby depositing polyaniline on the surface of anode. In this method, water must be used as solvent in order for the formed polymer to show electrochemical doping/dedoping characteristics ( to be electrochemically active ). When water is used as solvent, the morphology of formed polymer changes with the type and concentration of protonic acid used and the current ( or voltage ) value; however, the general tendency is that the polymer is formed as smooth film only when the electrical quantity supplied is lower than 1 coulomb/$cm^2$, but it is formed as agglomerated powder ( which has a lower apparent density and is broken down into powder upon drying ) with a larger electrical quantity, the formed polymer readily peeling from the electrode when the electrical quantity exceeds 10 coulomb/$cm^2$. In addition, the higher the current value, the more powdery the formed polymer. For these reasons, polyaniline obtained by electrolytic oxidative polymerization is also press-molded into pellets for practical use, as in the case with the products obtained by chemical synthesis.

When considering its practical applications, it is desirable that the formed polymer film be free-standing film

with satisfactory mechanical strengths —— that is, it is desirable that the formed polymer be kept in tight contact with the electrode surface and maintain its film state even after drying without being released as powder, thus eliminating the need for the after-treatment for press molding into pellets. This requires that the polymer be formed as dense film with a relatively high apparent density. A method has been proposed to solve this problem, in which the electrolytic voltage is maintained at a level slightly higher than the oxidation potential of aniline ( = 0.7 V/SCE ) and the current value is held at a lower level. However, it is difficult to obtain polymer film with the characteristics mentioned above by this method. Another method is to lower the polymerization temperature, but it is impracticable to carry out electrolytic polymerization at a temperature of -30$^{o}$c or lower so long as water is used as solvent.

## Summary of the Invention

This invention was accomplished under the circumstances described above. Its primary object is to provide a process for producing aromatic amine polymers, such as polyaniline, which gives polymer film by electrolytic oxidative polymerization.

Another object of this invention is to provide a process for producing aromatic amine polymers, which gives

uniform polymer film with a smooth surface by electrolytic oxidative polymerization at a low temperature.

A further object of this invention is to provide a process for producing aromatic amine polymers, which gives dense and high-quality polymer film by electrolytic oxidative polymerization for a relatively short period of time.

The first aspect of this invention provides a process for producing aromatic amine polymers by electrolytic oxidative polymerization of an aromatic amine, such as aniline, in the presence of a protonic acid, wherein an alcoholic solvent is used.

The second aspect of this invention provides a process for producing aromatic amine polymers which comprises dissolving an aromatic amine, such as aniline, and a protonic acid in a solvent, and subjecting this solution to electrolytic oxidative polymerization, wherein a metal salt is further added as a third component.

Water may be used as solvent in the second aspect of this invention, but it is preferable to use an alcoholic solvent as in the first aspect.

As the alcoholic solvent, may be used an alcoholic compound, a mixture of two or more of alcoholic ompounds, or a mixed solvent containing at least one alcoholic compound, and a metal halide may be used as the metal salt.

The advantages, aspects and objects of this invention may be more fully understood from the following descriptions including Examples which embody the principles of the invention.

Detailed Description of Preferred Embodiments

In the first aspect of this invention, an alcoholic solvent is used in palce of water conventionally employed for electrolytic oxidative polymerization. Alcohols show the second highest polarity ranking only after water, thus readily dissolving salts of aniline with protonic acids. In addition, methanol, for example, retains its fluidity even at -90°C, thus allowing polymerization at low temperatures.

Use of an alcoholic solvent thus allows dissolution of electrolytes at higher concentrations. For example, the solubility of aniline and a protonic acid in water is about 0.5 mole/l, while solutions of 2 mole/l or higher concentration can be obtained when alcohols are used. This means higher electrical conductivity, resulting in higher adhesion of the formed polymer to electrode surface. In addition, polymerization at lower temperatures gives polymer film with a smoother surface. Furthermore, when water is used as solvent, part of the current is consumed for its electrolysis, resulting in some loss in electric power, while this problem is eliminated when an alcoholic solvent is used.

Various types of alcohols may be used as solvent in the process of this invention. These include monohydric alcohols, such as methanol, ethanol, n-propanol, isopropanol, n-butanol, isobutanol, sec-butanol, tert-butanol, amyl alcohols ( including various isomers; the same applies correspondingly to the following ), and hexyl alcohols; and polyhydric alcohols, such as ethylene glycol, propylene glycols and glycerol. These compounds may be used either alone or in combination. In addition, a solvent mixture containing at least one alcoholic compound, such as an aqueous solution of alcohol, may also be used for the purpose of this invention.

In the second aspect of this invention, is used a metal salt as a third component. Electrolytic oxidative polymerization of an aromatic amine ( for example, aniline ) may be represented by the following equation.

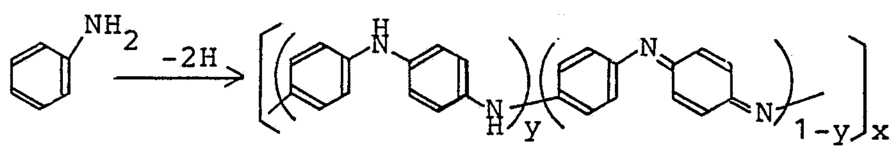


The mechanism of polymerization is not absolutly clear yet, but it is needless to say that hydrogen abstraction is included as an elementary step. Our investigation suggested that polymerization would be accelerated if the reaction of hydrogen abstraction, deemed to be the rate-

determining step, is caused to proceed more smoothly. Intensive studies on proper catalysts for this rate-determining step have led us to find that addition of a metal salt as a thrid component allows the polymerization to proceed very smoothly, thereby greatly shortening the time of electrolytic oxidative polymerization and giving dense and high-quality polymer film. If a metal salt is added, polymer is obtained in the form of film even when water is used as solvent, but an alcoholic solvent should be used in order to obtain polymer film with a more uniform and smooth surface.

As the metal salt, may be used those which are soluble in water or alcohols, including metal halides ( e.g., $CuCl_2$ and $SnCl_2$ ), metal nitrates ( e.g., $Ni(NO_3)_2$ ), metal acetates ( e.g., $Mg(OAc)_2$ ), metal sulfates ( e.g., $Na_2SO_4$ ), metal formates ( e.g., $Mn(HCOO)_2$ ), metal phosphates ( e.g., $Fe_3(PO_4)_2$ ), metal oxalates ( e.g., $Zn(C_2O_4)_2$ ), metal salts of fatty acids ( e.g., Zn octanoate ), metal naphthenates, metal borofluorides ( e.g., $Ni(BF_4)_2$ ), and metal perhalogenates ( e.g., $Fe(ClO_4)_2$ ).

Aniline is a typical example of the aromatic amine used as monomer, and other aniline derivatives, such as N-methylaniline, may also be used advantageously. As the protonic acid, may be used sulfuric acid, hydrochloric acid and other known compounds.

[ Examples ]

The following Examples and Comparative Examples will further illustrate the invention.

Example 1

A Ni electrode and a Nesa-glass electrode were put in a mixture of 300 ml methanol ( commercial reagent of Guaranteed Grade ), 37.5 ml ( 2 mole/l ) of conc. $H_2SO_4$ and 27.8 ml ( 1 mole/l ) of aniline, and a constant voltage of 1.2V was impressed to the Ni counter electrode. The current thus produced was about 0.5 $mA/cm^2$. Polymerization was continued until the quantity of electricity supplied reached 10 $coulomb/cm^2$, and a voltage of -0.2 V/Ni was then impressed until the quantity of electricity reached 1.3 $coulomb/cm^2$ to effect dedoping. The polymer film thus formed was thoroughly washed with pure methanol and dried in vacuum. The dry film could not be released from the Nesa glass as a sheet of film, but it was in close contact with the electrode surface and its surface was smooth and uniform.

It weighed 0.66 $mg/cm^2$ ( 10 c ) and its apparent density was 0.24 $g/cm^3$.

Comparative Example 1

A Ni electrode and a Nesa-glass electrode were put in a mixture of 290 ml water, 4.1 ml ( 0.25 mole/l ) of conc.

$H_2SO_4$, 2.7 ml ( 0.1 mole/l ) of aniline and 21 g ( 0.5 mole/l ) of anhydrous $Na_2SO_4$, and a constant voltage of 1.2V was impressed to the Ni counter electrode. The current thus produced was about 0.25 $mA/cm^2$. Polymerization was continued until the quantity of electricity supplied reached 2 $coulomb/cm^2$, and a voltage of -0.2 V/Ni was then impressed until the quantity of electricity reached 0.29 $coulomb/cm^2$ to effect dedoping. The polymer film thus formed was thoroughly washed with pure water and dried in vacuum. It was of a multilayer structure; the first layer in contact with the electrode surface was smooth, but the second layer formed thereupon was granular. Polyaniline layer ( the second layer ) was developed thicker in areas closer to the liquid surface, thus causing uneven film thickness.

The polymer film weighed 0.12 $mg/cm^2$ ( 2 c ).

Comparative Example 2

Polymerization of aniline was tried in much the same manner as in Comparative Example 1, except that polymerization was continued until the quantity of electricity supplied reached 3 $coulomb/cm^2$. However, polymer film with a sufficient thickness could not be obtained because polyaniline formed peeled off from the Nesa-glass electrode surface during polymerization or dedoping.

Example 2

Polyaniline was synthesized in much the same manner as in Example 1, except that ethanol was used as solvent in place of methanol.

The value of current produced was slightly smaller, but uniform polymer film with a smooth surface was obtained as in the case with methanol.

Example 3

Polymerization of aniline was carried out in much the same manner as in Example 1 at a temperature of -60°C, and a constant voltage of 1.2V was impressed to the Nesa-glass electrode. The current thus produced was about 0.25 $mA/cm^2$. Polymerization was continued until the quantity of electricity supplied reached 10 $coulomb/cm^2$, and a voltage of -0.2 V/Ni was then impressed until the quantity of electricity reached 0.3 $coulomb/cm^2$ to effect dedoping. The polymer film thus formed was thoroughly washed with pure methanol and dried in vacuum. Its surface was uniform and smooth, and showed a metallic luster.

Use Example 1 ( Examination of cell performances )

A beaker-type cell was constructed in a dry box filled with Ar gas using propylene carbonate containing 1 mole/l of $LiClO_4$ dissolved therein as electrolyte solution and a Li

foil as couter electrode.

Charging was carried out by application of a constant voltage of 3.8V to the Li counter electrode, immediately followed by constant-current discharge of 200 μA/cm$^2$. The discharge was stopped at 2.0 V/Li, and the maximum output desnsity was measured by charging of 3.8 V/Li, followed by constant-current discharge of 150 μA/cm$^2$ to 5 mA/cm$^2$.

The result obtained was 170 wh/Kg ( 55 Ah/Kg ) energy density, 1.6 KW/Kg maximum output density and 100% coulomb efficiency, indicating high cell performances.

Example 4

A Ni electrode and a Nesa-glass electrode were put in a mixture of 300 ml methanol, 37.5 ml ( 2 mole/l ) of $H_2SO_4$ and 27.8 ml ( 1 mole/l ) of aniline, and a constant voltage of 1.2V was impressed to the Ni counter electrode. The current thus produced was about 1 mA/cm$^2$. Polymerization was continued until the quantity of electricity supplied reached 10 coulomb/cm$^2$, and a voltage of -0.2 V/Ni was then impressed until the quantity of electricity reached 1.3 coulomb/cm$^2$ to effect dedoping. The polymer film thus formed was thoroughly washed with pure methanol and dried in vacuum. The dry film weighed 0.66 mg/cm$^2$ ( 10 c ) and its apparent density was 0.225 g/cm$^3$.

Example 5

Polymerization of aniline was carried out in much the same manner as in Example 4, except that 0.4 g ( 0.01 mole/l ) of anhydrous $CuCl_2$ was further added to the electrolyte solution, and a constant voltage of 1.2 V/Ni was impressed. The current thus produced was 4.3 $mA/cm^2$. Polymerization was continued until the quantity of electricity supplied reached 10 $coulomb/cm^2$, and a voltage of -0.2 V/Ni was then impressed until the quantity of electricity reached 1.5 $coulomb/cm^2$ to effect dedoping. The polymer film thus formed was thoroughly washed with pure methanol and dried in vacuum. The dry film weighed 0.65 $mg/cm^2$ ( 10 c ), its apparent density was 0.6 $g/cm^3$, and its surface was smoother than the film obtained in Example 4. In addition, it took only 1/4 of the time to complete polymerization compared with the case of Example 4.

Example 6

A Ni electrode and a Nesa-glass electrode were put in a mixture of 300 ml water, 37.5 ml ( 2 mole/l ) of $H_2SO_4$, 27.8 ml ( 1 mole/l ) of aniline and 0.4 g ( 0.01 mole/l ) of anhydrous $CuCl_2$, and a constant voltage of 1.2V was impressed to the Ni counter electrode. The current thus produced was about 40 $mA/cm^2$. Polymerization was continued until the quantity of electricity supplied reached 10

coulomb/$cm^2$, and a voltage of -0.2 V/Ni was then impressed until the quantity of electricity reached 1.5 coulomb/$cm^2$ to effect dedoping. The polymer film thus formed was thoroughly washed with pure water and dried in vacuum. The dry film weighed 0.6 mg/$cm^2$ ( 10 c ) and its apparent density was 0.39. It was constructed of polyaniline powder densely agglomerated.

The rate of polymerization was five times higher compared with the case of Comparative Example 3.

Comparative Example 3

Polymerization of aniline was carried out in much the same manner as in Example 6, except the electrolyte solution contained no $CuCl_2$. The current thus produced was about 8 mA/$cm^2$. Polymerization was continued until the quantity of electricity supplied reached 10 coulomb/$cm^2$, and a voltage of -0.2 V/Ni was then impressed until the quantity of electricity reached 1.4 coulomb/$cm^2$ to effect dedoping. The polymer film thus formed was thoroughly washed with pure water and dried in vacuum. The dry film weighed 0.63 mg/$cm^2$ ( 10 c ) and its apparent density was 0.25. It was constructed of agglomerated polyaniline powder, which was deposited thicker in areas closer to the liquid surface during polymerization, thus causing uneven film thickness.

Example 7

Polymerization of aniline was carried out in much the same manner as in Example 4, except that 0.8 g ( 0.01 mole/l ) of anhydrous $SnCl_2$ was further added to the electrolyte solution, and a constant voltage of 1.2 V/Ni was impressed. The current thus produced was about 2 $mA/cm^2$. Polymerization was continued until the quantity of electricity supplied reached 10 $coulomb/cm^2$, and a voltage of -0.2 V/Ni was impressed until the quantity of electricity reached 1.5 $coulomb/cm^2$ to effect dedoping. The polymer film thus formed was thoroughly washed with pure methanol and dried in vacuum. The dry film weighed 0.63 $mg/cm^2$ ( 10 c ), its apparent density was 0.3 $g/cm^3$, and its surface was smoother compared with the film obtained in Example 4. In addition, it took only half a time to complete polymerization compared with the case of Example 4.

Example 8

Aniline was polymerized in much the same maner as in Example 7, except that cobalt acetate was used in place of $SnCl_2$, giving uniform polymer film with a smooth surface.

Example 9

Polymerization of aniline was carried out in much the same manner as in Example 4, except that 0.01 mole/l of $V_2O_5$

was further added to the electrolyte solution, and a constant voltage of 1.2 V/Ni was impressed. The current thus produced was about 1.5 $mA/cm^2$. Polymerization was continued until the quantity of electricity supplied reached 10 $coulomb/cm^2$, and a voltage of -0.2 V/Ni was then impressed until the quantity of electricity reached 1.5 $coulomb/cm^2$ to effect dedoping. The polymer film thus formed was thoroughly washed with pure methanol and dried in vacuum. The dry film weighed 0.65 $mg/cm^2$ ( 10 c ), its apparent density was 0.7 $g/cm^3$, and its surface was far smoother compared with the film obtained in Example 4. The state of polymer film was conspicuously improved compared with the case of Example 4, although polymerization time could not be shortened.

Use Example 2 ( Examination of cell performances )

A beaker-type cell was constructed in a dry box filled with Ar gas using propylene carbonate containing 1 mole/l $LiClO_4$ dissolved therein as electrolyte solution and a Li foil as counter electrode.

Charging was carried out by application of a constant voltage of 3.8V to the Li counter electrode, immediately followed by constant-current discharge of 200 $\mu A/cm^2$. The discharge was stopped at 2.0 V/Li, and the maximum output desnsity was measured by charging of 3.8 V/Li, followed by

constant-current discharge of 150 $\mu A/cm^2$ to 5 $mA/cm^2$.

The results obtained above are summarized in Table 1, which shows the high cell performances of the polymer film prepared by the method of this invention.

Table 1

| | Third Component | Energy Density (wh/Kg) | Max. Output Density (Kw/Kg) |
|---|---|---|---|
| Example 5 | $CuCl_2$ | 180 | 1.2 |
| Example 6 | $CuCl_2$ | 150 | 1.5 |
| Example 7 | $SnCl_2$ | 160 | 1.6 |
| Example 9 | $V_2O_5$ | 175 | 1.2 |

As may be apparent from the foregoing, the process of this invention for producing aromatic amine polymers by electrolytic oxidative polymerization of an aromatic amine, such as aniline, in the presence of a protonic acid, in which an alcoholic solvent is used or a metal salt is further added to the electrolyte solution as a third component, gives polymer film made of fine polymer particles densely agglomerated and tightly deposited on the electrode surface. The use of an alcoholic solvent allows low-temperature polymerization, giving uniform polymer film with a smooth surface, and the addition of a metal salt as a third component accelerates the polymerization, giving dense and high-quality polymer film in a shorter time.

What Is Claimed Is:

1. A process for producing aromatic amine polymers by electrolytic oxidative polymerization of an aromatic amine, such as aniline, in the presence of a protonic acid, wherein an alcoholic solvent is used.

2. The process as defined in claim 1 wherein said alcoholic solvent is an alcoholic compound or a mixture of two or more of alcoholic compounds.

3. The process as defined in claim 1 wherein said alcoholic solvent is a mixture containing at least one alcoholic compound.

4. A process for producing aromatic amine polymers which comprises dissolving an aromatic amine, such as aniline, and a protonic acid in a solvent, and subjecting this solution to electrolytic oxidative polymerization, wherein a metal salt is added to the electrolyte solution as a third component.

5. The process as defined in claim 4 wherein said solvent is an alcoholic solvent.

6. The process as defined in claim 5 wherein said alcoholic solvent is an alcoholic compound or a mixture of two or more of alcoholic compounds.

7. The process as defined in claim 5 wherein said alcoholic solvent is a mixture containing at least one alcoholic compound.

8. The process as defined in claim 4 wherein said solvent is water.

9. The process as defined in any of claims 4 through 8 wherein said metal salt is a metal halide.

Filed on 30 Nov., 19

AMENDMENT

To: Director General of the Patent Office

1. Identification of the Internal Application:

PCT/JP88/00436 (International Filing Date: 28. 04. 88)

2. Applicant (Common Representative)

Name: KABUSHIKI KAISHA KOMATSU SEISAKUSHO

Address: 3-6, Akasaka 2-chome, Minato-ku, Tokyo 107, Japan

Country of nationality: Japan

Country of residence: Japan

3. Agent

Name: 7146 Patent Attorney, Yonehara Masaaki

Address: Bansui Bldg.,
5-16, Toranomon 1-chome, Minato-ku, Tokyo 105,
Japan

Name: 7381 Patent Attorney, Hamamoto Tadashi

Address: Ditto

4. Item to be amended

Claims

5. Subject Matter of Amendment

As shown in the attached paper.

6. List of Attached Documents

New page of claims to be substituted 1 set.

CLAIM

1. (Cancelled)

2. (Cancelled)

3. (Cancelled)

4. (Amended) In a process for producing aromatic amine polymers in which an aromatic amine such as, for example, aniline and a protonic acid are dissolved in a solvent so as to obtain an electrolyte solution, and then this electrolyte solution is subjected to electrolytic oxidative polymerization, characterized in that, in order to shorten the time required for the polymerization, a metal halide having a concentration of less than 0.01 mol/l is added to the electrolyte solution.

5. (Amended) The process as set forth in claim 4 wherein said solvent is an alcoholic solvent.

6. (Amended) The precess as set forth in claim 5 wherein said alcoholic solvent is an alcoholic compound or a mixture of two or more of alcoholic compound.

7. (Amended) The process as set forth in claim 5 wherein said alcoholic solvent is a mixture containing at least one alcoholic compound.

8. (Amended) The process as set forth in claim 4 wherein said solvent is water.

9. (Cancelled)

# INTERNATIONAL SEARCH REPORT

International Application No PCT/JP88/00436

**I. CLASSIFICATION OF SUBJECT MATTER** (if several classification symbols apply, indicate all) [6]

According to International Patent Classification (IPC) or to both National Classification and IPC

Int. $Cl^4$ C08G73/00, H01B1/12

**II. FIELDS SEARCHED**

Minimum Documentation Searched [7]

| Classification System | Classification Symbols |
|---|---|
| IPC | C08G73/00, H01B1/12 |

Documentation Searched other than Minimum Documentation to the Extent that such Documents are Included in the Fields Searched [8]

| | |
|---|---|
| Jitsuyo Shinan Koho | 1926 - 1988 |
| Kokai Jitsuyo Shinan Koho | 1971 - 1988 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| X | JP, A, 60-197728 (Nitto Electric Industrial Co., Ltd.) 7 October, 1985 (07.10.85) Page 1, upper right column, lines 4 to 12, page 3, upper right column, line 9 to lower right column, line 3 & GB, A, 2,151,242 & FR, A, 2,554,822 | 1 - 3 |
| X | JP, A, 61-21129 (Nitto Electric Industrial Co., Ltd.) 29 January, 1986 (29.01.86) Page 1, lower left column, lines 4 to 12, page 3, lower right column, line 7 to page 4, upper right column, line 12 (Family: none) | 1 - 3, 4 - 9 |
| X | JP, A, 61-204266 (Showa Denko Kabushiki Kaisha) 10 September, 1986 (10.09.86) Page 1, lower left column, line 4 to page 2, upper left column, line 10, page 3, lower right column, lines 2 to 14 | 1 - 3 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| July 19, 1988 (19.07.88) | August 1, 1988 (01.08.88) |
| **International Searching Authority** | **Signature of Authorized Officer** |
| Japanese Patent Office | |

**FURTHER INFORMATION CONTINUED FROM THE SECOND SHEET**

| | | |
|---|---|---|
| | (Family: none) | |
| X | JP, A, 61-225214 (Nitto Electric Industrial Co., Ltd.) 7 October, 1986 (07.10.86) Page 1, lower left column, line 4 to lower right column, line 18, page 2, lower right column, line 5 to page 3, upper left column, line 7 (Family: none) | 1 - 3, 4 - 9 |
| X | JP, A, 61-258833 (Nitto Electric Industrial Co., Ltd.) 17 November, 1986 (17.11.86) | 1 - 3, 4 - 9 |

**V.☐ OBSERVATIONS WHERE CERTAIN CLAIMS WERE FOUND UNSEARCHABLE [10]**

This international search report has not been established in respect of certain claims under Article 17(2) (a) for the following reasons:

1.☐ Claim numbers............, because they relate to subject matter [12] not required to be searched by this Authority, namely:

2.☐ Claim numbers............, because they relate to parts of the international application that do not comply with the prescribed requirements to such an extent that no meaningful international search can be carried out [13], specifically:

**VI.☐ OBSERVATIONS WHERE UNITY OF INVENTION IS LACKING [11]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

International Application No. PCT/JP88/00436

**FURTHER INFORMATION CONTINUED FROM THE SECOND SHEET**

Page 1, lower left column, line 4 to lower right column, line 12, page 5, lower right column, line 14 to page 6, upper right column, line 5 (Family: none)

**V. ☐ OBSERVATIONS WHERE CERTAIN CLAIMS WERE FOUND UNSEARCHABLE [10]**

This international search report has not been established in respect of certain claims under Article 17(2) (a) for the following reasons:

1. ☐ Claim numbers..........., because they relate to subject matter [12] not required to be searched by this Authority, namely:

2. ☐ Claim numbers..........., because they relate to parts of the international application that do not comply with the prescribed requirements to such an extent that no meaningful international search can be carried out [13], specifically:

**VI. ☐ OBSERVATIONS WHERE UNITY OF INVENTION IS LACKING [11]**

This International Searching Authority found multiple inventions in this international application as follows:

1. ☐ As all required additional search fees were timely paid by the applicant, this international search report covers all searchable claims of the international application.
2. ☐ As only some of the required additional search fees were timely paid by the applicant, this international search report covers only those claims of the international application for which fees were paid, specifically claims:
3. ☐ No required additional search fees were timely paid by the applicant. Consequently, this international search report is restricted to the invention first mentioned in the claims; it is covered by claim numbers:
4. ☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.